# EUROPÄISCHE PATENTSCHRIFT

(11) **EP 1 352 497 B1**
(45) Veröffentlichungstag und Bekanntmachung des Hinweises auf die Patenterteilung: **16.08.2006**
(21) Anmeldenummer: 01270983.8
(22) Anmeldetag: 04.12.2001
(51) Int. Cl.: H04L 12/24

(54) **VERFAHREN ZUR ÜBERPRÜFUNG EINES NETZWERKES UND NETZWERK HIERZU**
METHOD FOR CHECKING A NETWORK, AND CORRESPONDING NETWORK
PROCEDE POUR CONTROLER UN RESEAU ET RESEAU CORRESPONDANT

(30) Priorität: 15.12.2000 DE 10062545
(43) Veröffentlichungstag der Anmeldung: 15.10.2003
(73) Patentinhaber: ROBERT BOSCH GMBH, 70442 Stuttgart (DE)
(72) Erfinder: SCHOEBERL, Thomas, 31139 Hildesheim (DE); BAIERL, Wolfgang, 73630 Remshalden (DE)
(86) Internationale Anmeldenummer: PCT/DE2001/004535
(87) Internationale Veröffentlichungsnummer: WO 2002/049283

(56) Entgegenhaltungen:
- EP-A- 0 930 747
- WO-A-97/49057
- WO-A-98/44400
- US-A- 6 046 988

## Beschreibung

Die Erfindung betrifft ein Verfahren zur Überprüfung eines Netzwerkes, das aus Netzknoten und aus an Netzknoten angeschlossene Geräten besteht, wobei die Netztopologie mit mindestens der Netzknotenanzahl, der Netzknotenidentität und der Verschaltung der Netzknotenein- und ausgänge erfasst wird.

Die Erfindung betrifft ferner ein Netzwerk mit Netzknoten, die in einer Netzwerktopologie zusammengeschaltet sind, und mit Geräten an den Netzknoten, wobei die Netzknoten jeweils Speicher zum Abspeichern von Daten zur Kennzeichnung mindestens der Netzknotenidentität und wobei das Netzwerk zur Erfassung der aktuellen Netztopologie mit mindestens der Netzknotenanzahl, der Netzknotenidentität und der Verschaltung der Netzknotenein- und ausgänge durch Auslesen der Speicher der Netzknoten und Auswerten des Ablaufs der Datenübertragung beim Auslesen ausgebildet ist.

In dem IEEE-1394-Standard ist ein Netzwerk mit Netzknoten beschrieben, die eine serielle Busverbindung zwischen verschiedenen Geräten mit einer hohen Datenübertragungsrate bietet. Ein solches Netzwerk ist auch unter dem Namen FireWire oder iLink bekannt. Das Netzwerk wird im wesentlichen aus Netzknoten gebildet, die einen oder mehrere Netzknotenausgänge haben. Der Netzknoten kann in Geräten, wie z. B. Radio, Monitor, CD-Spieler etc. enthalten sein. An den Netzknotenein- und ausgängen können weitere Netzknoten angeschlossen sein.

Der übergeordnete Knoten eines Netzwerkes wird mit Root bezeichnet. Im Prinzip kann jeder Knoten zum Root werden. Zwei Knoten stehen in der Topologie mit einem Child und Parent-Verhältnis zueinander, d. h. der übergeordnete Knoten wird mit Parent und der untergeordnete mit Child bezeichnet. Ein Knoten kann daher gleichzeitig Parent zu einem Knoten und Child zu einem anderen Knoten sein.

Netzknoten, die nur an einen weiteren Netzknoten angeschlossen sind, werden als Abschlussknoten (Leaf) bezeichnet. Netzknoten mit zwei oder mehr angeschlossenen Netzknoten werden mit Brunch bezeichnet.

Das der Erfindung zugrunde liegende Netzwerk ist so ausgebildet, dass es sich selbstständig ohne einen Host-Prozessor konfiguriert, wobei die Erkennung der Netztopologie, d. h. die Konfiguration des Netzwerkes, nach einem Reset des Netzwerkes durchgeführt wird. Ein Rücksetzen (Reset) des Netzwerkes wird initiiert, wenn z. B. ein Gerät oder Netzknoten aus dem Netzwerk entfernt oder ein weiteres Gerät oder Netzknoten dem Netz zugefügt wird. Die Konfiguration eines Netzwerkes erfolgt üblicherweise in drei Stufen:

### 1. Businitialisierung:

Die Businitialisierung wird über ein Reset-Befehl ausgelöst, wobei die einzelnen Netzknoten das Reset-Signal an die anderen Netzknoten weiterleiten. In den Netzknoten werden alle Informationen zur vorherigen Netzwerktopologie gelöscht und die Netzknoten in den Initialisierungszustand versetzt.

### 2. Zweigidentifikation:

Bei der Zweigidentifikation wird die Topologie des Netzwerkes erkannt und die Abhängigkeit der Netzknoten zueinander identifiziert. Durch die selbstständige Identifizierung der Netzknoten als "parent" und "child" zueinander wird ein Root-Netzknoten als Ausgangsknoten bestimmt, der das Bus- bzw. Netzwerkmanagement übernimmt.

### 3. Selbstidentifikation:

Für das Netzwerkmanagement müssen die Netzwerktopologie und die physikalischen Eigenschaften der Netzknoten bekannt sein. Dazu übertragen die Netzknoten während der Selbstidentifikation die wichtigsten physikalischen Eigenschaften in einem Self-ID-Packet. Die Übertragung der Daten der einzelnen Netzknoten geschieht in der Reihenfolge der Topologieanordnung des Netzwerkes, so dass die Position der Netzknoten im Netz identifiziert werden kann. Der Root-Netzknoten speichert innerhalb der "Topologie-Map" die Anzahl der angeschlossenen Netzknoten und deren Self-ID-Packets ab. Anhand der Topologiemap kann die Netzwerktopologie, die Netzknotennummer "phy_id" und die physikalischen Eigenschaften der angeschlossenen Netzknoten abgefragt werden.

Für die Netzwerkkonfiguration ist in jedem Netzknoten ein Registerspeicher vorgesehen, in dem eine Netzknoten- bzw. Geräte-Identifikationsnummer sowie weitere Informationen über den Netzknoten bzw. das Gerät abgespeichert sind. Jedes Gerät bzw. jeder Netzknoten ist mit einer eindeutigen Identifizierung des Herstellers "Vendor-ID" versehen, die ebenfalls in dem Registerspeicher abgelegt ist. Zudem ist eine eindeutige Nummer des integrierten Schaltkreises in dem Registerspeicher abgelegt (Chip-ID), in dem die Hard- und Software zur Realisierung des Netzwerkknotens eingebaut ist. Als Zusatzinformationen können die physikalischen Eigenschaften des Netzknotens und die Zustände der zugehörigen Netzausgänge (Ports) in dem Registerspeicher eingetragen sein. Die Eigenschaften können z. B. Geschwindigkeit (sp=speed), Verzögerungszeit (del=delay), Pausenabstand (gap-cnt=gap-count), Spannungsklasse (pwr= power class) etc. sein.

Der Root-Netzknoten verfügt in der Regel über einen Registerspeicher zum Abspeichern der sogenannten Netztopologie-Map, die die Anzahl der angeschlossenen Netzknoten und der von den Netzknoten an den Root-Netzknoten gesendeten Informationen über die Eigenschaften der jeweiligen Netzknoten (Self-ID-Packets). Jedem Netzknoten wird hierbei von dem Root-Netzknoten eine Netzknotennummer "phy_id" zugewiesen. Die von einem Netzknoten an den Root- Netzknoten gesendeten Informationen (Self-ID-Packets) umfassen die Netzknotennummer (phy_id), Pausenanzahl (gap-cnt), Geschwindigkeit (sp), Verzögerung (del), Spannungsklasse (pwr) sowie weitere Informationen.

Auf diese Weise kann eine Datenübertragung von einem Netzknoten zu einem anderen Netzknoten stattfinden.

Mit dem IEEE-1394-Standard ist ein serieller Bus definiert. Ähnliche Busse sind auch MOST, HiQoS, CAN, Univeral-Serial-Bus (USB) etc., die ebenfalls ein gattungsgemäßes Netzwerk darstellen.

Bei den herkömmlichen Netzwerken wird nach einer Änderung der Netzwerktopologie z. B. durch Hinzufügen oder Entfernen von Geräten ein Reset des Netzwerkes durchgeführt und die Information zu der vorhergehenden Netzwerktopologie geht verloren. Dies ist insbesondere problematisch, wenn Fremdgeräte hinzugefügt werden oder an dem Netzwerk manipuliert wird.

Dazu zeigt die WO98/44400 ein Bus-System, welches in einem Flugzeug Verwendung findet und fest verdrahtet und in einer entsprechenden Verdrahtungsdatenbasis niedergelegt ist Diese Verdrahtungsdatenbasis wird dann mit einer Datenbasis verglichen, die die individuellen Sitzadressen der Sitze in dem Flugzeug enthält. Diese beiden Datenbasen werden dann miteinander verglichen und zusammengefügt zu einer Datenbasis, die die Sitznamen und entsprechenden Sitzadressen enthält. In einem weiteren Schritt werden dann den entsprechenden Sitzen noch IP-Adressen zugeordnet. Dabei wird nun jedem Sitz eine eindeutige IP-Adresse zugeordnet, um innerhalb des Bussystems jeden Sitz individuell anzusteuern. Da in einem solchen Flugzeug die Sitze ein- und ausgebaut werden können, können sich die individuellen Sitzadressen ändern, obwohl die entsprechende Verdrahtung gleich bleibt. Das Verfahren WO98/44400 dient dann dazu, auch bei einer Veränderung dieser Sitzadressen eine eindeutige Beziehung zwischen den Sitz-individuellen Adressen und entsprechenden IP-Adressen herzustellen, um so auch bei Veränderungen der Sitzadressen immer eine eindeutige IP-Adressierung jedes Sitzes zu gewährleisten. Damit werden in einem durch die Verdrahtung fest vorgegebenen System verschieden Adressierungssysteme in einander übergeführt.

Weiterhin zeigt die WO97/49057 ein IEEE-1394-Bussystem sowie einer Darstellung für dieses Bussystem typischen Topologie-Karte auf einem Bildschirm. Eine Wiederherstellung einer Referenz-Netztopologie durch die Aktivierung einzelner Knoten ist darin nicht gezeigt.

Aufgabe der Erfindung war es daher, ein Verfahren zur Überprüfung eines gattungsgemäßen Netzwerks anzugeben, bei dem Änderungen an dem Netzwerk und an den angeschlossenen Geräten und Netzknoten identifiziert werden können, um das Netzwerk ständig auf einer Referenz-Netztapologie zu betreiben.

Die Aufgabe wird durch das erfindungsgemäße Verfahren gelöst durch Vergleichen einer aktuellen Netztopologie mit einer abgespeicherten Referenz-Natztopologie für das Netzwerk zu Erkennung einer Änderung der Anzahl und/oder Art, der an das Netzwerk angeschlossenen Geräte der Netztopologie und/oder der Netzknoten, in denen eine Änderung vorliegt, wobei die Referenz-Netztopologie durch automatisches Deaktivieren von Netzknoten, Netzknotenausgängen und/oder Geräten an den Netzknotenausgängen, die nicht in der Referenz-Netztopologie vorgesehen sind, wiederhergestellt wird. Auf diese Weise ist nicht nur eine Überwachung des Netzwerkes, sondern auch eine Sicherung vor Manipulation des Netzwerkes und Missbrauchs durch unzulässige Fremdgeräte ausgeschlossen.

Es wird somit vorgeschlagen, eine Referenz-Netztopologie dauerhaft abzuspeichern, die bei einem Reset des Netzwerkes nicht geändert oder gelöscht wird. Auf diese Weise kann die aktuelle Netztopologie verglichen und Änderungen an dem Netzwerk erkannt werden.

Eine Referenz-Netztopologie wird vorteilhafterweise auf Anforderung durch Übernahme einer aktuellen Netztopologie als Referenz-Netztopologie angespeichert, in dem die Daten für die aktuelle Netztopologie aus einem zentralen Netztopologie-Speicher für das Netzwerk und aus dezentralen Netzknoten-Speichem eingelesen und die eingelesenen Daten in einem Referenz-Netztopologie-Speicher abgespeichert werden.

Die Überprüfung des Netzwerkes wird bei einer Neuinitialisierung des Netzwerkes selbsttätig durchgeführt.

Das Vergleichen der aktuellen Netztopologie mit der Referenz-Netztopologie erfolgt vorzugsweise durch Vergleich der Dateninhalte, die in einem Vergleichs-Netztopologie-Speicher und einem Referenz-Netztopologie-Speicher abgespeichert sind. Die Daten für die aktuelle Netztopologie werden hierbei aus einem zentralen Netztopologie-Speicher für das Netzwerk und aus dezentralen Netzknotenspeichern eingelesen und in einem Vergleichs-Netztopologie-Speicher abgespeichert.

Das Verfahren wird vorzugsweise für ein Netzwerk entsprechend dem IEEE-1394-Standard angewendet, kann gleichermaßen aber auch für Universal Serial Bus (USB-Netzwerke) oder MOST-Netzwerke etc. verwendet werden.

Entsprechend der oben beschriebenen Erfindung ist in dem gattungsgemäßen Netzwerk ein Speicher zur dauerhaften Abspeicherung einer Referenz-Netztopologie für das Netzwerk und eine Vergleichseinheit zum Vergleichen der aktuellen Netztopologie mit der Referenz-Netztopologie zur Überprüfung des Netzwerkes und Erkennung einer Änderung der Anzahl und/oder Art der an das Netzwerk angeschlossenen Geräte, der Netztopologie und/oder der Netzknoten, an denen eine Änderung vorliegt, vorgesehen.

Das Netzwerk ist vorzugsweise nach Anforderung zur automatischen Abspeicherung der erfassten aktuellen Netztopologie als Referenz-Netztopologie in dem Speicher für die Referenz-Netztopologie ausgebildet. Auf diese Weise wird eine als zulässig erkannte aktuelle Netztopologie als Referenz-Netztopologie für zukünftige Überprüfungen definiert.

Das Netzwerk ist weiterhin vorzugsweise zur selbsttätigen Überprüfung des Netzwerkes nach einer Neuinitialisierung oder einem Zufügen bzw. Entfernen einer Netzwerkkomponente ausgebildet.

Weiterhin ist es vorteilhaft, wenn ein Vergleichs-Netztopologiespeicher zum Abspeichern der erfassten aktuellen Netztopologie in dem Netzwerk, insbesondere in einem Root-Netzknoten vorgesehen ist. Die Vergleichseinheit ist dann zum Vergleich der Dateninhalte, die in dem Vergleichs-Netztopologie-speicher und in dem Referenz-Netztopologie-Speicher abgespeichert sind, ausgebildet.

Das Netzwerk und insbesondere die Netzknoten sind besonders vorteilhaft so ausgebildet, dass sie die Referenz-Netztopologie durch automatisches Deaktivieren von Netzknoten, Netzknotenausgängen und/oder Geräten an den Netzknotenausgängen, die nicht in der Referenz-Netztopologie vorgesehen sind, wiederherstellen.

Das Netzwerk entspricht vorzugsweise dem IEEE-1394-Standard oder entsprechenden anderen Standards, wie z. B. dem Universal Serial Bus- Standard (USB, MOST, HiQoS, CAN etc).

Die Erfindung wird nachfolgend anhand der beigefügten Zeichnungen am Beispiel eines Netzwerkes entsprechend dem IEEE-1394-Standard näher erläutert. Es zeigen:
- Figur 1 -: Schematische Darstellung eines einfachen Netzwerkes mit sechs Netzknoten;
- Figur 2 -: Schematische Darstellung des geänderten Netzwerkes aus der Figur 1;
- Figur 3 -: Skizze des Verfahrens zum Einlesen einer aktuellen Netzwerktopologie in den Vergleichs-Netzwerktopologie-Speicher;
- Figur 4 -: Skizze des Verfahrens zur Initialisierung der Referenz-Netzwerktopologie und zur Überprüfung der aktuellen Netzwerktopologie;
- Figur 5 -: Tabellarische Darstellung des Speicherinhalts der Netztopologie-Map gemäß 1394-Standard;
- Figur 6 -: Tabellarische Darstellung des von den Netzknoten versandten Datenpakets "Self-ID-Packet" gemäß 1394-Standard;
- Figur 7 -: Minimaler Registerspeicherinhalt für die Netzeigenschaften eines Netzknotens gemäß 1394 Standard;
- Figur 8 -: Genereller Speicherinhalt des Registerspeichers eines Netzknotens gemäß 1394-Standard.

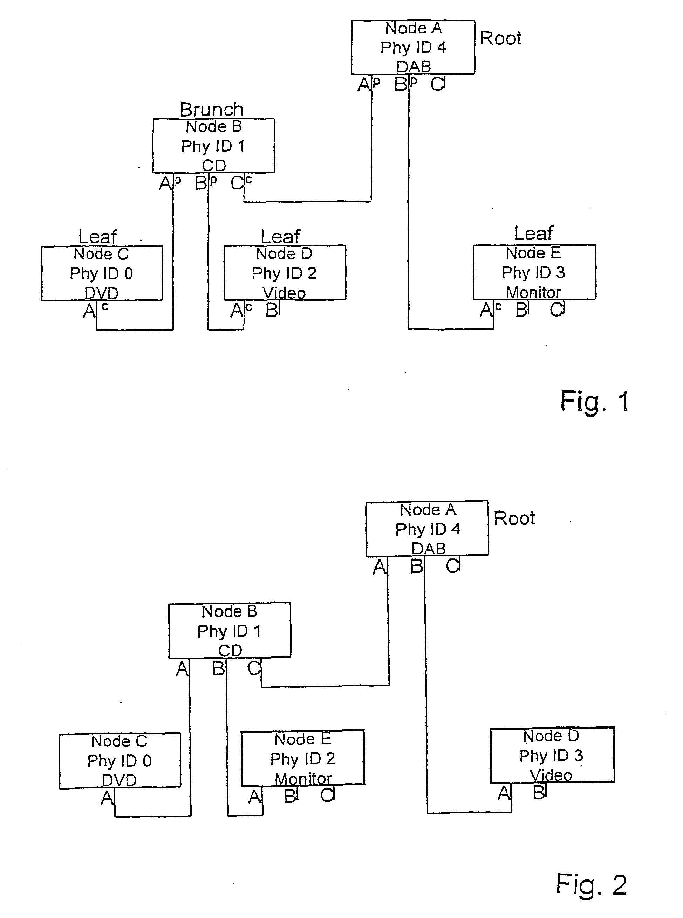

Die Figur 1 lässt die schematische Darstellung eines Netzwerkes erkennen, das aus sechs Netzknoten Node A bis E besteht. Ausgangspunkt des Netzwerkes bildet der Netzknoten Node A, der als Root-Netzknoten bezeichnet wird und als solcher das Netzwerkmanagement übernimmt. Diesem Netzknoten Node A ist die Identitätsnummer phy_id = 4 zugeteilt. Er hat drei Netzknotenausgänge A, B und C. An den Netzknotenausgang A ist ein weiterer Netzknoten Node B mit der Identitätsnummer phy_id= 1 an den Port C angeschlossen, wobei der Netzknoten Node A als parent (Eltern) und der darunterliegende Netzknoten Node B als "child" (Kind) bezeichnet wird.

An den Netzknotenanschluss A und B sind weitere Netzknoten Node C und Node D mit den Identifikationsnummern phy_id = 0 und phy_id = 2 angeschlossen. Diese Netzknoten Node C und Node D bilden den Abschluss des Netzwerkes und werden somit als Abschlussknoten (Leaf) bezeichnet. Sie bilden wiederum Child-Knoten zu dem Netzknoten Node B, der diesbezüglich ein Parent-Knoten ist.

An den Netzanschluss B des Root-Netzknotens Node A ist ein weiterer Abschlussknoten Node E mit der Identifikationsnummer phy_id = 3 angeschlossen.

Die Netztopologie wird durch die Zuordnung der Netzknoten zueinander als "parent" und "child", sowie durch die physikalischen Eigenschaften der Netzknoten und der an den Netzknoten angeschlossenen Geräte bestimmt. Das Netzwerk ist insbesondere für digitale Audio- und Videoanwendungen z. B. für CD-Spieler, Videorecorder, Camcorder, Monitore etc. geeignet. Der Root-Netzknoten bildet in dem dargestellten Beispiel eine Übertragungsschnittstelle für ein Gerät nach dem Digital-Audio-Broad-Cast-Standard DAB.

Die Figur 2 zeigt beispielhaft eine Änderung des Netzwerkes aus Figur 1, wobei die Netzknoten Node D und Node E vertauscht sind. Die Identitätsnummer phy_id bleibt von der Position des Netzknotens in dem Netzwerk abhängig, so dass der Netzknoten Node E die Identifikationsnummer phy_id=2 des Netzknotens Node D erhält, der vorher an dieser Position war. Entsprechendes gilt für den Netzknoten Node D, der die Indentifikationsnummer phy_id=3 erhält.

Das Netzwerk bzw. die einzelnen Netzknoten sind so ausgebildet, dass sie die Netztopologie automatisch erkennen können. Die Netztopologie wird hierbei in einer sogenannten Topologie-Map in dem Root-Knoten gespeichert.

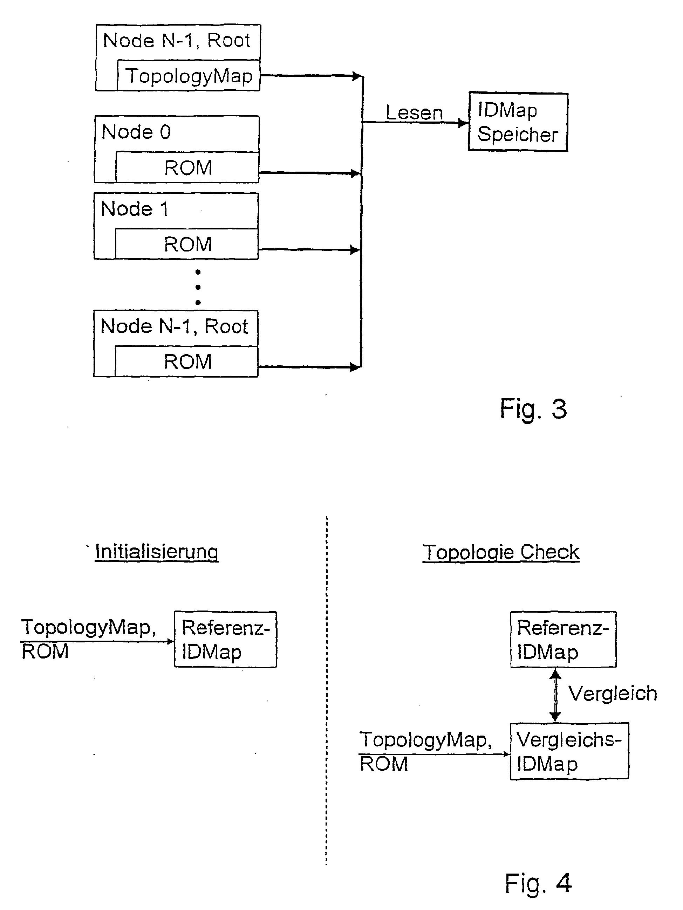

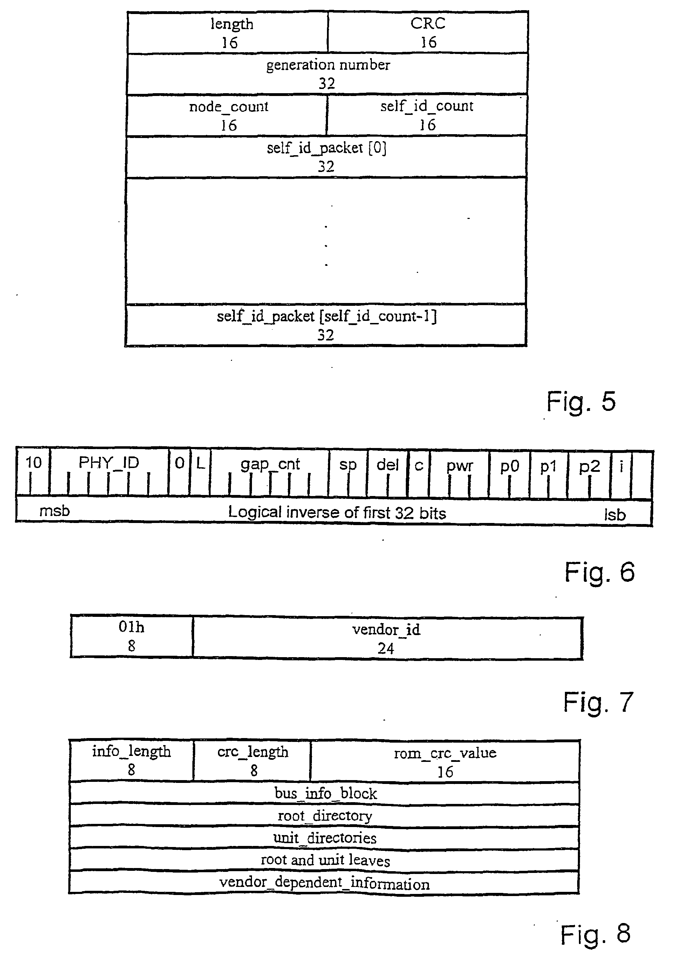

Die Erfassung der Netztopologie ist in der Figur 3 skizziert. Es ist zu erkennen, dass jeder Netzknoten einen Registerspeicher ROM hat, in dem mindestens die Netzknotenidentität und die Verschaltung der Netzknotenausgänge abgespeichert ist. In jedem Netzknoten ist eine eindeutige Herstellernummer Vendor-ID sowie weiterer Informationen über die physikalischen Eigenschaften des Netzknotens fest eingeschrieben. Auf den Inhalt wird später nochmals im Detail mit Bezug auf die Figuren 5 bis 8 eingegangen.

Entsprechend dem IEEE-1394-Standard wird die aktuelle Netztopologie automatisch erfasst, sobald ein Netzknoten oder Gerät entfernt bzw. hinzugefügt wird.

Nach dem Entfernen oder Hinzufügen des Knotens wird ein Reset ausgelöst. Die Zuordnungen werden neu vergeben, d. h. es kann ein anderer Knoten zum Root werden. Die Übertragung der Informationen läuft teilweise selbstständig ohne ständige Erneuerung der Anforderung durch den Root-Knoten ab.

Dann werden Informationen von den untergeordneten Netzknoten Node O bis Node N - 2 zum Root-Netzknoten geliefert und die Netzknotenanzahl in dem Netzwerk, die Identifikationsnummern phy_id, Informationen über die Kommunikations- und physikalischen Eigenschaften der Netzknoten etc. in der sogenannten Topologie-Map abgespeichert. Der detaillierte Inhalt der Topologie-Map wird später anhand der Figur 5 erläutert werden.

Anhand der Topologie-Map wird die Kommunikation in dem Netzwerk von dem Root-Netzknoten gesteuert.

Erfindungsgemäß wird nunmehr eine aktuelle Vergleichs-Netztopologie in dem sogenannten ID-Map-Speicher abgelegt, in dem die Dateninhalte aus der Topologie-Map und den Netzknoten-Registerspeichern ROM ausgelesen und in einer definierten Weise in dem ID-Map-Speicher abgelegt werden.

Die Figur 4 lässt erkennen, dass bei einer anfänglichen Initialisierung des Netzwerkes auf Anforderung eine Referenz-Netztopologie auf der Basis einer aktuellen Netztopologie, die als Referenz-Netztopologie dienen soll, abgespeichert wird. Hierzu werden wie in der Figur 3 bereits skizziert, die Topologie-Map und die Registerspeicher ROM der Netzknoten Node 0 bis Node N - 1 eingelesen.

Auf Anforderung oder bei einem Reset des Netzwerkes wird das Netzwerk automatisch überprüft, indem die aktuelle Netztopologie mit der Referenz-Netztopologie verglichen wird. Ein Reset wird gemäß dem IEEE-1394-Standard automatisch durchgeführt, z. B. sobald ein Netzknoten oder Endgerät dem Netzwerk hinzugefügt oder entfernt wird. Ein Reset kann auch aus anderen Gründen ausgelöst werden, wie z. B. bei einer Änderung des Power-Modus vom Standby-Modus in den On-Modus.

Die Überprüfung des Netzwerkes erfolgt derart, dass die Vergleichs-Netztopologie durch Einlesen der Dateninhalte der Topologie-Map und der Registerspeicher ROM der Netzknoten erfasst und mit der dauerhaft abgespeicherten Referenz-Netztopologie (Referenz-ID-Map) verglichen wird.

Die Änderungen des Netzwerkes können auf einem Monitor angezeigt, z. B. über einen Drucker protokolliert oder aber auch korrigiert werden. Die Wiederherstellung der Referenz-Netztopologie kann derart erfolgen, dass die unzulässigerweise hinzugefügten Netzknoten oder Geräte automatisch deaktiviert werden.

Die Figur 5 lässt den Dateninhalt der Topologie-Map gemäß dem IEEE-1394-Standard erkennen. Die Topologie-Map besteht zunächst aus Basisinformationen, wie z. B. Länge (length) sowie aus Basisinformationen über das Netzwerk, wie Knotenanzahl (node-count) und Anzahl der von den Netzknoten übersandten Datenpaketen (self-id-count). Ferner werden die von den Netzknoten übersandten Datenpaket aufeinanderfolgend abgelegt.

Von den Netzknoten werden die in der Figur 6 skizzierten Datenpakete an den Root-Netzknoten übersandt. Diese Datenpakete (Self-ID-Packets) bestehen im wesentlichen aus der Identifikationsnummer phy_id des Netzknotens, der Pausenzahl (gap-count), der Geschwindigkeit (sp), der Verzögerungszeit (del), der Spannungsklasse (pwr) und Informationen über die Netzknotenanschlüsse P0, P1 und P2. Die phy_id wird durch den Reset-Prozess automatisch vergeben und ist keine physikalische im Speicher des Netzknotens abgelegte Eigenschaft des Netzknotens. Die Identifikationsnummer phy_id wird durch die Reihenfolge bei der Übertragung der Self-ID-Packets entsprechend der Reihenfolge Child/Parent zueinander eindeutig bestimmt.

Die Netztopologie kann anhand der Datenpakete eindeutig anhand der Identifikationsnummer phy_id, die Netzknotenanschlüsse P0, P1 und P2 sowie der Netzknotenanzahl "Node-count" eindeutig bestimmt werden. Die weiteren Informationen sind nicht notwendigerweise zur Überprüfung des Netzwerkes erforderlich, können aber hilfreich sein, um ggf. Manipulationen an den Netzknoten oder Endgeräten zu erkennen.

Entsprechend müssen beim Auslesen der Registerspeicher ROM der Netzknoten sowie beim Auslesen der Topofogie-Map zur Erstellung der Vergleichs-Netztopologie bzw. der Referenz-Netztopologie nicht sämtliche Dateninhalte, sondern nur die erforderlichen Dateninhalte ausgelesen und miteinander verglichen werden.

Die Figur 7 zeigt den minimalen Dateninhalt des Registerspeichers eines Netzknotens, der aus dem Vorspann 01H und der eindeutigen Herstellerkennung Vendor-ID besteht. Weiterhin können die in der Figur 8 skizzierten Zusatzinformationen in dem Registerspeicher der Netzknoten abgelegt werden. Der Inhalt dieser Daten ist im folgenden jedoch nicht von Bedeutung, so dass auf den IEEE-1394-Standard verwiesen wird.

Wesentlich für das gattungsgemäße Netzwerk ist, dass die Netzknoten so ausgebildet sind, dass sie automatisch die Datenpakete (self-id-packets) erzeugen und an den Root-Netzknoten senden, so dass in der Topologie-Map die physikalischen Eigenschaften der Netzknoten und die Zustände der zugehörigen Netzknotenanschlüsse eingetragen werden können.

Üblicherweise werden die entsprechenden Netzwerkverwaltungsprozeduren in einen entsprechend spezialisierten integrierten Schaltkreis (Chip) implementiert. Die Überprüfung des Netzwerkes und das Netzwerkmanagement wird somit nicht von einem Host-Computer sondern von den entsprechend spezialisierten integrierten Schaltkreisen oder in Software ausgeführt.

## Patentansprüche

1. Verfahren zur Überprüfung eines Netzwerkes, das aus Netzknoten (Node A, Node B, ..., Node E) und aus an die Netzknoten angeschlossene Geräten (CD, DVD, DAB, Video, Monitor) besteht, mit den Schritten:
- Erfassung der Netztopologie mit mindestens der Netzknotenanzahl (node-count), der Netzknotenidentität und der Verschaltung der Netzknotenein- und ausgänge (A, B, C)
- Vergleichen der erfassten aktuellen Netztopologie mit einer abgespeicherten Referenz-Netztopologie für das Netzwerk (Referenz-ID-Map) zur Erkennung einer Änderung der Anzahl und /oder Art der an das Netzwerk angeschlossenen Geräte und/oder der Netzknoten, **gekennzeichnet durch**
- Das Wiederherstellen der Referenz-Netztopologie (Referenz-ID-Map) **durch** automatisches Deaktivieren von Netzknoten, Netzknotenausgängen und/oder Geräten an den Netzknotenausgängen, die nicht in der Referenz-Netztopologie vorgesehen sind.

2. Verfahren nach Anspruch 1, wobei eine aktuelle Netztopologie als Referenz-Netztopologie (Referenz-ID-Map), abgespeichert wird durch
- Einlesen der Daten für die aktuelle Netztopologie aus einem zentralen Netztopologie-Speicher (ID-Map-Speicher) für das Netzwerk und dezentralen Netzknoten-Speichern (ROM), und
- Abspeichern der eingelesenen Daten in einem Referenz-Netztopologie-Speicher.

3. Verfahren nach Anspruch 1, **dadurch gekennzeichnet, dass** die Überprüfung bei einer Neuinitialisierung des Netzwerkes selbsttätig durchgerührt wird.

4. Verfahren nach einem der Ansprüche 1 bis 3, **gekennzeichnet durch**
- Einlesen der Daten für die erfasste aktuelle Netztopologie aus einem zentralen Netztopologie-Speicher (ID-Map-Speicher) für das Netzwerk und dezentralen Netzknoten-Speicher (ROM).
- Abspeichern der eingelesenen Daten in einen Vergleichs-Netztopologie-Speicher (Vergleichs-ID-Map)
- Vergleichen der erfassten aktuellen Netztopologie mit der Referenz-Netztopologie **durch** Vergleich der Dateninhalte, die in dem Vergleichs-Netztopologie-Speicher (Vergleichs-ID-Map) und in einem Referenz-Netztopologie-Speicher (Referenz-ID-Map) abgespeichert sind.

5. Verfahren nach einem der vorhergehenden Ansprüche, wobei das Netzwerk dem IEEE-1394-Standard entspricht.

6. Netzwerk mit Netzknoten (Node A, Node B, ..., Node E), die in einer Netzwerktopologie zusammen geschaltet sind, und mit Geräten an Netzknoten (CD, DVD, DAB, Video, Monitor), wobei die Netzknoten jeweils Speicher (ROM) zum Abspeichern von Daten zur Kennzeichnung mindestens der Netzknotenidentität (phy_id) und der Verschaltung der Netzknotenausgänge haben, und wobei das Netzwerk zur Erfassung der aktuellen Netztopologie mit mindestens der Netzknotenanzahl, der Netzknotenidentität und der Verschaltung der Netzknotenausgänge durch Auslesen der Speicher (ROM) der Netzknoten ausgebildet ist und
- einem Speicher zur Abspeicherung einer Referenz-Netztopologie (Referenz-ID-Map) für das Netzwerk, sowie
- einer Vergleichseinheit zum Vergleichen der erfassten aktuellen Netztopologie mit der abgespeicherten Referenz-Netztopologie zur Überprüfung des Netzwerkes und der Erkennung einer Änderung der Anzahl und/oder Art der an das Netzwerk angeschlossenen Geräte und/oder der Netzknoten, **dadurch gekennzeichnet, dass**
- das Netzwerk zur Wiederherstellung der Referenz-Netztopologie durch automatisches Deaktivieren von Netzknoten, Netzknotenausgängen und/oder Geräten an den Netzknotenausgängen ausgebildet ist, die nicht in der Referenz-Netztopologie vorgesehen sind.

7. Netzwerk nach Anspruch 6, **dadurch gekennzeichnet, dass** das Netzwerk nach Anforderung zur Abspeicherung der erfassten aktuellen Netztopologie als Referenz-Netztopologie in den Speicher für die Referenz-Netztopologie ausgebildet ist.

8. Netzwerk nach Anspruch 6, **dadurch gekennzeichnet, dass** das Netzwerk derart ausgebildet ist, dass es bei einem Reset automatisch überprüft wird durch Vergleich der erfassten aktuellen Netztopologie mit der Referenz-Netztopologie.

9. Netzwerk nach Anspruch 6 oder 7, **dadurch gekennzeichnet, dass** das Netzwerk zur selbsttätigen Überprüfung des Netzwerkes nach einer Neuinitialisierung oder einem Zufügen bzw. Entfernen einer Netzwerkkomponente ausgebildet ist.

10. Netzwerk nach einem der Anspruche 6 bis 9, **gekennzeichnet dadurch, dass** einen Vergleichs-Netztopologie-Speicher zum Abspeichern der erfassten aktuellen Netztopologie, wobei die Vergleichseinheit zum Vergleich der Dateninhalte ausgebildet ist, die in dem Vergleichs-Netztopologie-Speicher und in dem Referenz-Netztopologie-Speicher abgespeichert sind.

11. Netzwerk nach einem der Ansprüche 6 bis 10, **dadurch gekennzeichnet, dass** das Netzwerk dem IEEE-1394-Standard entspricht.

## Claims

1. Method for checking a network which comprises network nodes (Node A, Node B, ...., Node E) and devices (CD, DVD, DAB, Video, Monitor) connected to the network nodes, having the following steps:
- detection of the network topology with at least the number of network nodes (node-count), the network node identity and the interconnection of the network node inputs and outputs (A, B, C),
- comparison of the detected current network topology with a stored reference network topology for the network (Reference ID Map) for identifying a change in the number and/or type of devices connected to the network and/or in the network nodes, **characterized by**
- the reference network topology (Reference ID Map) being restored by automatically deactivating network nodes, network node outputs and/or devices on the network node outputs which are not provided in the reference network topology.

2. Method according to Claim 1, where a current network topology is stored as reference network topology (Reference ID Map) by
- reading in the data for the current network topology from a central network topology memory (ID Map memory) for the network and from local network node memories (ROM), and
- storing the read-in data in a reference network topology memory.

3. Method according to Claim 1, **characterized in that** the check is performed automatically when the network is reinitialized.

4. Method according to one of Claims 1 to 3, **characterized by**
- the data for the detected current network topology being read in from a central network topology memory (ID Map memory) for the network and from local network node memories (ROM),
- the read-in data being stored in a comparison network topology memory (Comparison ID Map),
- the detected current network topology being compared with the reference network topology by comparing the data contents which are stored in the comparison network topology memory (Comparison ID Map) and in a reference network topology memory (Reference ID Map).

5. Method according to one of the preceding claims, where the network is based on the IEEE-1394 standard.

6. Network with network nodes (Node A, Node B,..., Node E) which are interconnected in a network topology, and with devices on network nodes (CD, DVD, DAB, Video, Monitor), where the network nodes respectively have memories (ROM) for storing data for flagging at least the network node identity (phy_id) and the interconnection of the network node outputs, and where the network is designed to detect the current network topology with at least the number of network nodes, the network node identity and the interconnection of the network node outputs by reading the memories (ROM) at the network nodes, and
- a memory for storing a reference network topology (Reference ID Map) for the network, and also
- a comparison unit for comparing the detected current network topology with the stored reference network topology for the purpose of checking the network and identifying a change in the number and/or type of devices connected to the network and/or in the network nodes, **characterized in that**
- the network is designed to restore the reference network topology by automatically deactivating network nodes, network node outputs and/or devices on the network node outputs which are not provided in the reference network topology.

7. Network according to Claim 6, **characterized in that** the network is designed to store the detected current network topology as reference network topology in the memory for the reference network topology upon request.

8. Network according to Claim 6, **characterized in that** the network is designed such that it is automatically checked in the event of a reset by comparing the detected current network topology with the reference network topology.

9. Network according to Claim 6 or 7, **characterized in that** the network is designed to check the network automatically following reinitialization or the addition or removal of a network component.

10. Network according to one of Claims 6 to 9, **characterized by** a comparison network topology memory for storing the detected current network topology, where the comparison unit is designed to compare the data contents which are stored in the comparison network topology memory and in the reference network topology memory.

11. Network according to one of Claims 6 to 10, **characterized in that** the network is based on the IEEE-1394 standard.

## Revendications

1. Procédé de contrôle d'un réseau composé de noeuds de réseau (noeud A, noeud B, ..., noeud E) et d'appareils (CD, DVD, DAB, moniteur vidéo) connectés aux noeuds de réseau, comprenant les étapes de :
- détermination de la topologie de réseau avec au moins le nombre de noeuds de réseau (node-count), l'identité des noeuds de réseau et l'interconnexion des entrées et sorties des noeuds de réseau (A, B, C),
- comparaison de la topologie de réseau déterminée avec une topologie de réseau de référence enregistrée pour le réseau (ID-Map de référence) pour détecter une modification du nombre et/ou du type des appareils connectés au réseau et/ou des noeuds de réseau,
**caractérisé par**
la restitution de la topologie de réseau de référence (ID-Map de référence) par désactivation automatique de noeuds de réseau, de sorties de noeuds de réseau et/ou d'appareils connectés aux sorties de noeuds de réseau, qui ne sont pas prévus dans la topologie de réseau de référence.

2. Procédé selon la revendication 1,
**caractérisé en ce que**
comme topologie de réseau de référence (ID-Map de référence), une topologie de réseau est enregistrée par
- introduction des données pour la topologie de réseau depuis une mémoire de topologie de réseau centrale (mémoire de ID-Map) pour le réseau et depuis des mémoires de noeuds de réseau décentralisées (ROM), et
- enregistrement des données introduites dans une mémoire de topologie de réseau de référence.

3. Procédé selon la revendication 1,
**caractérisé en ce que**
le contrôle est effectué automatiquement lors d'une réinitialisation du réseau.

4. Procédé selon l'une quelconque des revendications 1 à 3,
**caractérisé par**
- l'introduction des données pour la topologie de réseau déterminée depuis une mémoire de topologie de réseau centrale (mémoire de ID-Map) pour le réseau et depuis une mémoire de noeuds de réseau décentralisée (ROM),
- l'enregistrement des données introduites dans une mémoire de topologie de réseau de comparaison (ID-Map de comparaison),
- la comparaison de la topologie de réseau déterminée avec la topologie de réseau de référence par comparaison des contenus de données enregistrés dans la mémoire de topologie de réseau de comparaison (ID-Map de comparaison) et dans une mémoire de topologie de réseau de référence (ID-Map de référence).

5. Procédé selon l'une quelconque des revendications précédentes, dans lequel le réseau correspond à la norme IEEE 1394.

6. Réseau comprenant des noeuds de réseau (noeud A, noeud B, ..., noeud E) qui sont interconnectés dans une topologie de réseau, et des appareils (CD, DVD, DAB, vidéo, moniteur) connectés aux noeuds de réseau, les noeuds de réseau présentant chacun une mémoire (ROM) pour enregistrer des données pour la caractérisation d'au moins l'identité des noeuds de réseau (phy_id) et l'interconnexion des sorties des noeuds de réseau, et le réseau étant configuré pour déterminer la topologie de réseau comprenant au moins le nombre de noeuds de réseau, l'identité des noeuds de réseau et l'interconnexion des sorties des noeuds de réseau par lecture des mémoires (ROM) des noeuds de réseau, et comprenant
- une mémoire pour enregistrer une topologie de réseau de référence (ID-Map de référence) pour le réseau, et
- une unité de comparaison pour comparer la topologie de réseau déterminée avec la topologie de réseau de référence enregistrée pour contrôler le réseau et détecter une modification du nombre et/ou du type des appareils connectés au réseau et/ou des noeuds de réseau,
**caractérisé en ce que**
le réseau est configuré pour restituer la topologie de réseau de référence par désactivation automatique de noeuds de réseau, de sorties de noeuds de réseau et/ou d'appareils connectés aux sorties de noeuds de réseau qui ne sont pas prévus dans la topologie de réseau de référence.

7. Réseau selon la revendication 6,
**caractérisé en ce que**
sur demande le réseau est configuré pour enregistrer la topologie de réseau déterminée comme topologie de réseau de référence dans la mémoire pour la topologie de réseau de référence.

8. Réseau selon la revendication 6,
**caractérisé en ce que**
le réseau est configuré pour être contrôlé automatiquement lors d'une réinitialisation par une comparaison de la topologie de réseau déterminée avec la topologie de réseau de référence.

9. Réseau selon la revendication 6 ou 7,
**caractérisé en ce que**
le réseau est configuré pour le contrôle automatique du réseau après une réinitialisation, une addition ou une suppression d'un composant du réseau.

10. Réseau selon l'une quelconque des revendications 6 à 9,
**caractérisé en ce qu'**
il comprend une mémoire de topologie de réseau de comparaison pour enregistrer la topologie de réseau déterminée, l'unité de comparaison étant configurée pour comparer les contenus de données enregistrés dans la mémoire de topologie de réseau de comparaison et dans la mémoire de topologie de réseau de référence.

11. Réseau selon l'une quelconque des revendications 6 à 10,
**caractérisé en ce que**
le réseau correspond à la norme IEEE 1394.
